# EUROPÄISCHE PATENTSCHRIFT

(11) **EP 0 497 256 B1**
(45) Veröffentlichungstag und Bekanntmachung des Hinweises auf die Patenterteilung: **14.08.1996**
(21) Anmeldenummer: 92101303.3
(22) Anmeldetag: 28.01.1992
(51) Int. Cl.: B65D 83/68, B05B 11/00

(54) **Austragvorrichtung für Medien**
Dispensing device for media
Distributeur pour média

(30) Priorität: 29.01.1991 DE 4102506
(43) Veröffentlichungstag der Anmeldung: 05.08.1992
(73) Patentinhaber: Ing. Erich Pfeiffer GmbH, 78315 Radolfzell (DE)
(72) Erfinder: Fuchs, Karl-Heinz, W-7760 Radolfzell (DE)
(74) Vertreter: Patentanwälte Ruff, Beier, Schöndorf und Mütschele

(56) Entgegenhaltungen:
- EP-A- 0 427 609
- DE-A- 3 614 515
- DE-A- 3 729 491
- US-A- 4 460 711

## Beschreibung

Die Erfindung betrifft eine Austragvorrichtung nach dem Oberbegriff des Patentanspruches 1. Mit ihr soll insbesondere manuell mindestens ein fließfähiges Medium auszutragen sein, das einen beliebigen Aggregatzustand haben kann, bevorzugt jedoch pastös, flüssig und/oder pulverförmig ist. Derartige Austragvorrichtungen können zweckmäßig mindestens einen Medienspeicher sowie wenigstens eine Austrageinheit aufweisen, die durch eine manuell anzutreibende Pumpe, ein Aerosolventil oder dgl. gebildet sein kann. Außerdem ist eine Austrag-Betätigung vorgesehen, die meist durch einen Druckkopf gebildet und über einen Betätigungshub zu betätigen ist, von dem wenigstens ein Teil auch gleichzeitig ein Austraghub sein kann, über welchen das Medium aus der Austragvorrichtung herausgefördert wird.

Aus zahlreichen Gründen kann bei solchen Austragvorrichtungen das Bedürfnis bestehen, daß wenigstens über einen Teil des Betätigungshubes ein Austrag nicht oder nur mit einer Fördergeschwindigkeit erfolgt, die wesentlich geringer als die maximale Fördergeschwindigkeit ist. Werden z.B. zwei Austrageinheiten über eine gemeinsame Austrag-Betätigung gleichzeitig betätigt, so kann es zweckmäßig sein, die Austraghübe der beiden Austrageinheiten zeitlich versetzt beginnen und/oder enden zu lassen. Wird dies bei Verwendung von Austragpumpen als Austrageinheiten durch Verzögerung des Druckaufbaues in der Druckkammer bewirkt, so kann sich eine sehr komplizierte und kaum zuverlässige Justierung ergeben. Eine wenigstens teilweise Abkopplung des Austraghubes vom Betätigungshub kann aber auch aus anderen Gründen zweckmäßig sein, z.B., wenn gegen unbefugten Gebrauch in einer vorgegebenen Funktionsstellung zwar eine Betätigung, nicht aber ein Austrag möglich sein soll.

Die DE-A-3 614 515, die den Oberbegriff des Anspruchs 1 bildet, zeigt eine Austragvorrichtung mit zwei gesonderten Austrageinheiten, welche auf nicht näher erläuterte Weise aufeinander folgend fördern können. Die EP-A-0 427 609, die als Stand der Technik nach Artikel 54(3) EPÜ gilt, zeigt eine Austragvorrichtung, bei welcher der Austraghub über einen Verzögerungshub wenigstens teilweise vom Betätigungshub abgekoppelt und so mindestens eine Funktionseinheit mit der Austragbetätigung über eine für die Austrageinheit wenigstens teilweise betätigungsfreie Verzögerung bewegbar ist. Die Betätigungshandhabe ist hier jedoch außer im Bereich von Betätigungsstößeln nicht weiter gegenüber den beiden Austrageinheiten gesichert.

Der Erfindung liegt die Aufgabe zugrunde, eine Austragvorrichtung der genannten Art zu schaffen, bei welcher Nachteile bekannter Ausbildungen vermieden sind. Insbesondere soll es auf einfache Weise möglich sein, den Austraghub wenigstens von einem Teil des Betätigungshubes abzukoppeln, ohne daß hierfür besondere Ausgestaltungen der Arbeitscharakteristik der Austrageinheit selbst erforderlich sind.

Erfindungsgemäß sind die Merkmale des Patentanspruches 1 vorgesehen. Vorzugsweise ist mindestens ein Medienspeicher, wenigstens eine Austrageinheit und/oder eine ähnliche Funktionseinheit im wesentlichen als Ganzes mit der Austrag-Betätigung so über einen Verzögerungshub bewegbar, daß sie hierbei im Sinne des Austrages nicht oder allenfalls nur mit reduzierter Fördermenge pro Hubeinheit betätigt wird.

Sind z.B. entsprechend der DE-A-3 614 515, auf die wegen weiterer Einzelheiten, Vorteile und Wirkungen Bezug genommen wird, zwei gesonderte Austrageinheiten über eine gemeinsame Handhabe zu betätigen, so kann hierdurch trotz z.B. etwa gleichen Fördervolumens das effektive Fördervolumen aus dem einen Medienspeicher gegenüber demjenigen des anderen beliebig reduziert werden. Auch kann der Beginn des Austrages aus dem einen Medienspeicher gegenüber demjenigen aus dem anderen Medienspeicher zeitlich verzögert werden oder es können Auslaßventile dieser beiden Austrageinheiten so justiert werden, daß bei zwar etwa gleichzeitigem Beginn des Austrages das Medium in einer Austrageinheit wesentlich stärker vorkomprimiert wird und daher mit höherem Druck als aus der anderen Austrageinheit austritt. Ist durch eine Umstellung der Verzögerungshub ein- bzw. auszurücken oder sein Beginn und/oder sein Ende und somit ggf. seine Länge zu verändern, so kann diese Ausbildung auch als Sicherung gegen unbefugten Austrag bzw. zur Veränderung einer dosierten Austragmenge verwendet werden, wobei die Austragvorrichtung auch nur einen einzigen Medienspeicher und/oder eine einzige Austrageinheit aufweisen kann.

Anstatt die Austrageinheit, z.B. ein Pumpengehäuse, gegenüber dem Medienspeicher über den gesamten Verzögerungs- bzw. Leerhub oder einen Teil davon zu bewegen, ist die Anordnung bevorzugt so vorgesehen, daß der Medienspeicher gegenüber einem Grundkörper mit der Austrag-Betätigung gleichlaufend mitbewegt werden kann, so daß in diesem Fall eine Relativbewegung zwischen den für den Austrag zu bewegenden Bauteilen der Austrageinheit nicht erfolgt, der Basiskörper der Austrageinheit jedoch im wesentlichen starr mit dem Medienspeicher verbunden sein kann.

Zur Bewirkung des Verzögerungshubes könnte zwar die Betätigungshandhabe gegenüber einem Betätigungsglied der Austrageinheit, z.B. einem Betätigungsstößel, über einen Leerweg bewegbar sein, jedoch ist es zur Erzielung einfacher Abdichtungen zweckmäßig, wenn der bewegbare Funktionsteil mit der Betätigungshandhabe unabhängig bzw. gesondert von der Verbindung durch das Betätigungsglied über einen Mitnehmer oder dgl. verbunden ist. Die Verbindung erfolgt zweckmäßig so, daß der Funktionsteil zunächst im wesentlichen ohne Betätigung gleichlaufend oder ggf. unter reduzierter Betätigung verlangsamt mitgenommen wird, wobei der Funktionsteil am Ende des Verzögerungshubes durch Anschlag festgelegt werden kann, so daß die Austrageinheit über den anschließenden restlichen Teil des Betätigungshubes gleichlaufend betätigt wird. Hierbei gibt dann zweckmäßig der Mitnehmer z.B. dadurch federnd nach, daß er in seiner wirksamen Länge verkürzt wird.

Die erfindungsgemäße Ausbildung ist auch für solche Austragvorrichtungen bzw. Austrageinheiten geeignet, mit welchen nur eine einzige, im wesentlichen vollständige Entleerung des Medienspeichers erfolgt und daher ein Rückhub nicht erforderlich ist. Besonders geeignet ist sie jedoch für Austrageinheiten, die aufgrund im wesentlichen jedes Rückhubes aus dem Medienspeicher in eine Druck- bzw. Pumpkammer eine vorbestimmte Medienmenge wieder ansaugen und beim nächsten Betätigungshub wieder abgeben können. Solche Austrageinheiten können z.B. Schubkolbenpumpen sein, die im Innern eines Zylindergehäuses eine auf den Pumpkolben wirkende Rückstellfeder vollständig verkapselt aufnehmen. Diese Rückstellfeder ist auch dafür geeignet, nach jedem Betätigungshub die gesamte Austragvorrichtung in ihre Austragslage zurückzustellen, so daß eine gesonderte Rückstellfeder nicht erforderlich ist. Zu dieser Rückstellung gehört dann auch die Rückstellung der bewegbaren Funktionseinheit um den Verzögerungshub. Hierzu wird statt eines gesonderten Mitnehmers zweckmäßig der genannte Mitnehmer verwendet, der z.B. nach Art einer Schnappverbindung eine Ringschulter der Funktionseinheit hintergreift, wobei die Ringschulter durch einen Ringflansch am Ende eines Gefäßhalses des Medienspeichers gebildet sein kann. Dadurch ist es auch auf einfache Weise möglich, den Funktionsteil bei der Montage über eine Steck- bzw. Schnappverbindung mit der Betätigungshandhabe zu verbinden.

Sofern nicht oder nicht nur die Austrageinheit gegenüber dem Medienspeicher, sondern der Medienspeicher selbst über wenigstens einen Teil des Verzögerungshubes bewegbar ist, ist für dessen Lagerung ein gesonderter Grundkörper vorgesehen, der zweckmäßig als mindestens einen oder alle Medienspeicher im wesentlichen vollständig verkapselt aufnehmendes Gehäuse ausgebildet ist, gegenüber welchem die Betätigungshandhabe um den Betätigungshub verschiebbar ist. Dieses Außengehäuse kann zur Lagerung des bewegbaren Funktionsteiles ein im wesentlichen einteilig mit ihm ausgebildetes Innengehäuse, z.B. einen von einer Stirnwand im wesentlichen berührungsfrei nach innen vorstehenden Lagerschacht aufweisen, dessen von der Stirnwand abgekehrte Bodenwand den Anschlag für die bewegbare Funktionseinheit bildet. Eine einfache Montage ergibt sich, wenn der bewegbare Funktionsteil bzw. mindestens eine geschlossene Baugruppe aus Medienspeicher und Austrageinheit von der Seite dieser Stirnwand her in das Gehäuse eingesetzt wird, während mindestens eine entsprechende, jedoch nicht bewegbar anzuordnende Baugruppe vom anderen Ende des Gehäuses her eingesetzt und vorzugsweise im Bereich der Innenseite dieser Stirnwand über eine Schnappverbindung gesichert wird. Nach dem Einsetzen kann dieses andere, zunächst offene Ende des Gehäuses dann mit einem Deckel, einer Kappe oder dgl. verschlossen werden. Nach dem Einsetzen der Baugruppen läßt sich die kappenförmige Betätigungshandhabe durch Steck- bzw. Schnappverbindungen aufsetzen und dadurch gleichzeitig mit den über die Stirnwand vorstehenden Betätigungsgliedern aller Austrageinheiten verbinden.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Ein Ausführungsbeispiel der Erfindung ist in den Zeichnungen dargestellt und wird im folgenden näher erläutert. In den Zeichnungen zeigen:
- Fig. 1: eine erfindungsgemäße Austragvorrichtung in teilweise geschnittener Ansicht,
- Fig. 2: die Austragvorrichtung gemäß Fig. 1 in teilweise geschnittener Seitenansicht und
- Fig. 3: die Austragvorrichtung gemäß Fig. 2 in teilweise geschnittener Draufsicht.

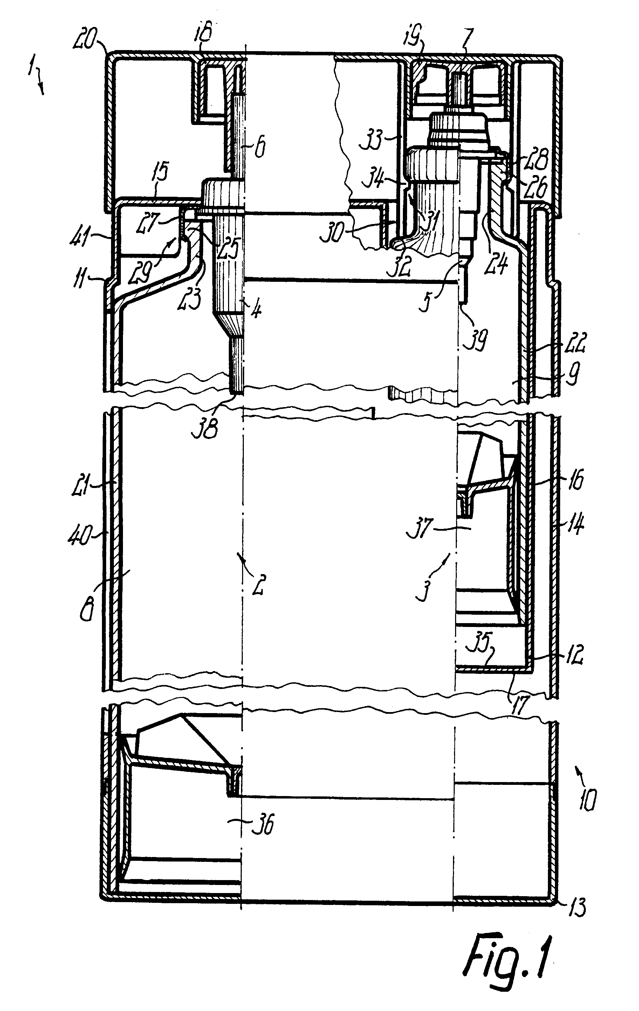

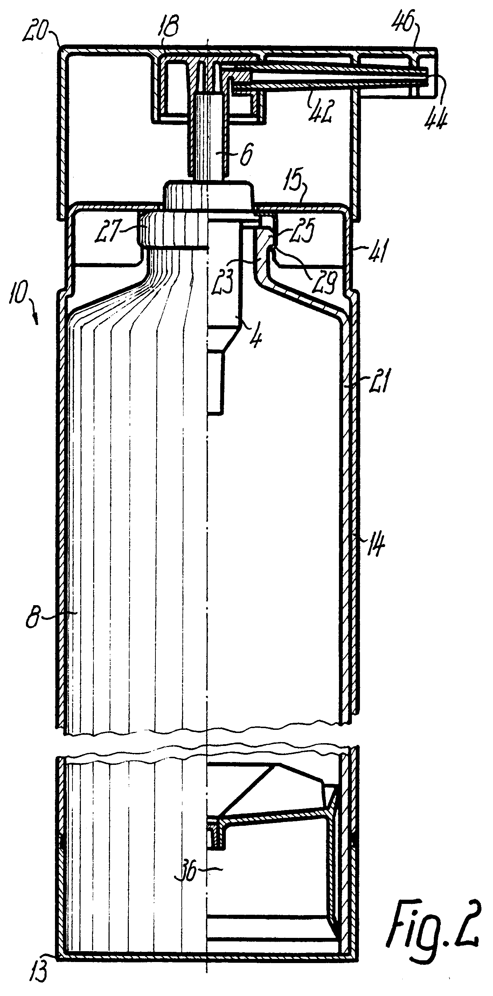

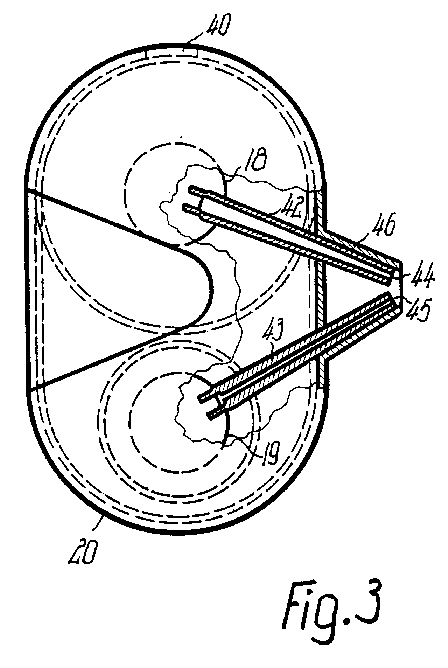

Die Austragvorrichtung 1 gemäß den Figuren 1 bis 3 weist zwei auch gesondert zum Austrag voll funktionsfähige Austraggruppen 2, 3 auf, die jeweils im wesentlichen aus einer Austrageinheit 4, 5 mit einem Betätigungsglied 6, 7 und einem Medienspeicher 8, 9 bestehen. Mindestens eine Austrageinheit 4 bzw. 5 ist durch eine Schubkolbenpumpe gebildet, deren Gehäuse abgedichtet und lagefest mit dem zugehörigen Medienspeicher 8 bzw. 9 verbunden ist und etwa in dessen Mittelachse liegt.

Die beiden Austraggruppen 2, 3 sind unmittelbar benachbart zueinander, jedoch im wesentlichen berührungsfrei und parallel nebeneinander an einem dünnwandigen Grundkörper 10 angeordnet, der einteilig ein Außen-Gehäuse 11 und ein Innen-Gehäuse 12 bildet. Das, eine Außenfläche der Austragvorrichtung 1 bildende Außen-Gehäuse 11 ist am bodenseitigen Ende mit einem kappenförmigen Verschluß 13 verschlossen, dessen Mantel gleiche Querschnittsform wie der Mantel 14 des Gehäuses 11 hat und durch einander übergreifende Ringstege mit dem Mantel 14 verbunden ist. Dem Verschluß 13 gegenüberliegend weist der Mantel 14 als Endbegrenzung eine einteilig mit ihm ausgebildete Stirnwand 15 auf, und der Mantel 16 des Gehäuses 12 schließt einteilig im wesentlichen nur an die Innenseite dieser Stirnwand 15 so an, daß er mit einem Spaltabstand von der Innenseite des Mantels 14 liegt und nur über einen Teil von dessen Innenlänge reicht. Das Innere, im Abstand vom Boden des Verschlusses 13 liegende Ende des Mantels 16 ist einteilig mit einem Boden 17 dicht verschlossen.

Auf dem außerhalb des Gehäuses 11 liegenden Schubstößel bzw. Betätigungsglied 6, 7 der jeweiligen Austrageinheit 4, 5 ist benachbart zur Außenseite der Stirnwand 15 eine gesonderte Austrag- bzw. Betätigungs-Kappe 18, 19 durch Aufstecken eines innen liegenden Halses befestigt, der von einem wesentlich weiteren Kappenmantel umgeben ist. Jede Austraggruppe 2 bzw. 3 kann daher, wenn sie von dem Grundkörper 10 entnommen ist, für sich zum Austrag manuell betätigt werden. Auf die Kappen 18, 19 ist eine gemeinsame Betätigungshandhabe 20 aufgesteckt, die für jede Kappe 18 bzw. 19 eine nur über die Innenseite ihrer Stirnwand vorstehende Steckmuffe aufweist und deren Kappenmantel im wesentlichen gleiche Querschnittsform wie der Mantel 14 bzw. der Mantel des Verschlusses 13 hat. Die Innenweite des Gehäuses 11 ist verhältnismäßig eng an die Außenweite des im Querschnitt weiteren Medienspeichers 8 angepaßt, so daß dieser unmittelbar gegenüber der Innenseite des Mantels 14 etwa auf einem halbkreisförmigen Bogen abgestützt und zentriert ist. Benachbart zum etwa gleich weiten, halbkreisförmigen Querschnittsbogen des im Querschnitt flachovalen Mantels 14 liegt der im Querschnitt engere Medienspeicher 9, der somit nicht wie der Medienspeicher 8 in der Mittelachse des zugehörigen Querschnittsbogens vorgesehen ist.

Mindestens ein Medienspeicher 8 bzw. 9 besteht aus durchsichtigem oder durchscheinendem Werkstoff und weist einen im wesentlichen zylindrischen Gefäßbauch 21 bzw. 22 auf, der an einem Ende über eine abgesetzte Ringschulter in einen verengten Gefäßhals 23 bzw. 24 übergeht und am anderen Ende auf voller Innenweite offen ist. Am Ende des Gefäßhalses 23 bzw. 24 ist jeweils ein geringfügig nach außen erweiterter Halsflansch 25 bzw. 26 vorgesehen, an welchem das Gehäuse der jeweiligen Austrageinheit 4 bzw. 5 mit einem Krimpring 27, 28 oder dgl. so gesichert ist, daß es unter Zwischenlage einer Dichtung mit einem Ringflansch unter Spannung an der Endfläche des Gefäßhalses 23 bzw. 24 anliegt. Die gegenüber dem Grundkörper 10 feststehend angeordnete Austraggruppe 2 durchsetzt mit einem Teil der Länge des Gehäuses ihrer Austrageinheit 4 eine eng angepaßte Öffnung in der Stirnwand 15 und ist durch eine an der Innenseite dieser Stirnwand 15 liegende Schnappverbindung 29 auch dann gegenüber dem Grundkörper 10 lagegesichert, wenn der Verschluß 13 noch nicht aufgesetzt wird. Diese Austraggruppe 2 wird vor dem Aufsetzen des Verschlusses 13 vom zugehörigen Ende her in den Grundkörper 10 eingesetzt und schlägt dann mit dem Ringflansch bzw. dem Krimpring 27 der Austrageinheit 4 an der Innenseite der Stirnwand 15 an, wobei die Schnappverbindung 29 einrückt. Diese kann z.B. durch über den Umfang sternförmig verteilte Rippen gebildet sein, welche mit abgesetzten Schnappschultern den Krimpring 27 im Bereich der Übergangsschulter des Halsflansches 25 hintergreifen. Das andere Ende des Medienspeichers 8 reicht im wesentlichen bis zur Innenseite des Bodens des Verschlusses 13, so daß der Medienspeicher 8 zwischen diesem Boden 13 und der Stirnwand 15 im wesentlichen spielfrei verspannt werden kann und dieser Boden einen Verschluß des offenen Endes des Gefäßbauches 21 bildet.

Die andere Austraggruppe 3 ist mit der Betätigungshandhabe 20 gegenüber dem Grundkörper 10 verschiebbar, und zwar, ausgehend von der Ausgangsstellung, über einen ersten Teilweg der Betätigungshandhabe 20. Zu diesem Zweck bildet der Mantel 16 des Gehäuses 12 eine lineare Schiebelagerung für den Gefäßbauch 22 des Medienspeichers 9. Die Austraggruppe 3 ist in beiden entgegengesetzten Bewegungsrichtungen im wesentlichen formschlüssig über einen Mitnehmer 30 mit der Betätigungshandhabe 20 verbunden. Dieser Mitnehmer 30 kann z.B. aus einer ein- oder mehrfach längsgeschlitzten Hülse bestehen, welche in Längsrichtung über die zugehörige Steckmuffe vorsteht und über eine Schnappverbindung 31 mit dem Medienspeicher 9 verbunden ist. Die Hülse liegt mit ihrer Endfläche an der Ringschulter 32 zwischen dem Gefäßbauch 22 und dem Gefäßhals 24 an und bildet im Querschnitt um die Mittelachse der Mitnehmerverbindung gekrümmte Federarme. Jeder Federarm weist einen an der Innenseite vorstehenden Schnappnocken 34 auf, welcher den Halsflansch 26 bzw. den Krimpring 28 in der anhand der Schnappverbindung 29 beschriebenen Weise hintergreift. Diese Austraggruppe 3 kann mit der Betätigungshandhabe 20 vormontiert werden, wonach sie von der Seite der Stirnwand 15 her in das auf voller Innenweite im Bereich der Stirnwand 15 offene Gehäuse 12 eingeführt wird, bis die Betätigungshandhabe 20 auch in Eingriff mit dem Betätigungsglied selbst bzw. der Kappe 18 gelangt. Das offene Ende des Gefäßbauches 22 liegt dann in einem gegenüber dem Gesamthub der Betätigungshandhabe 20 kleineren Abstand vom Boden 17, der einen Anschlag 35 für dieses Ende bildet. Der Gefäßhals 24 kann in dieser Ausgangsstellung über die Außenseite der Stirnwand 15 vorstehen. Durch Abziehen der Betätigungshandhabe 20 von dem Gehäuse 11 kann der Medienspeicher 9 bzw. die Austraggruppe 3 jederzeit entnommen und z.B. gegen eine neue ausgewechselt werden.

Im Bereich seines der jeweiligen Austrageinheit 4 bzw. 5 gegenüberliegenden Endes ist der Speicherraum des jeweiligen Medienspeichers 8 bzw. 9 durch einen Schleppkolben 36 bzw. 37 begrenzt, der unter dem beim Ansaugen des Mediums auftretenden Unterdruck selbsttätig entlang des zugehörigen Gefäßbauches 21, 22 unter Aufrechterhaltung der Abdichtung verschoben wird und in einem Kolbenboden eine mit einem Deckel verschließbare Füllöffnung für den Speicherraum hat. Dem Schleppkolben 36 bzw. 37 liegt die in den Speicherraum hineinragende Saugöffnung 38 bzw. 39 der jeweiligen Austrageinheit 4 bzw. 5 im Abstand gegenüber, wobei diese Saugöffnung 38 bzw. 39 durch das Gehäuseende der zugehörigen Austrageinheit 4 bzw. 5 gebildet ist und z.B. unter Zwischenschaltung eines Einlaßventiles in eine Pumpenkammer führt.

Zum Austrag wird die Betätigungshandhabe 20 durch Fingerdruck an der Außenseite ihrer Stirnwand gegenüber dem Gehäuse 11 niedergedrückt. Dabei wird sofort bzw. über den gesamten Betätigungshub die Austrageinheit 4 so betätigt, daß in ihrer Pumpenkammer befindliches Medium ausgetragen wird. Die Austraggruppe 3 dagegen wird über einen ersten Teilhub gleichlaufend mit der Betätigungshandhabe 20 mitgenommen, so daß zunächst keine Betätigung der Austrageinheit 5 erfolgt. Erst wenn das Ende des Medienspeichers 9 am Anschlag 35 anliegt, ergibt sich über den restlichen Betätigungshub der Betätigungshandhabe 20 auch eine Betätigung der Austrageinheit 5, nämlich eine Relativbewegung der Betätigungshandhabe 20 bzw. des Betätigungsgliedes 7 gegenüber dem Gehäuse der Austrageinheit 5. Mit dem Betätigungsglied 7 ist ein sich entsprechend bewegender Pumpkolben verbunden. Am Ende des Betätigungshubes wird die Betätigungshandhabe 20 freigegeben, so daß die in den Gehäusen der Austrageinheiten 4, 5 befindlichen Rückstellfedern die Austrageinheiten 4, 5 in ihre Ausgangslage zurückstellen, während die Rückstellfeder der Austrageinheit 4 außerdem die Austraggruppe 3 gegenüber dem Grundkörper 10 in ihre Ausgangslage zurückstellt.

Sobald die Austraggruppe 3 am Anschlag 35 angeschlagen hat, werden die Federarme 33 unter ausbauchender Verformung in ihrer effektiven Länge verkürzt, wobei die Schnappnocken 34 von ihrer Schnapplage zwar abheben bzw. ausrücken können, jedoch bei Freigabe der Betätigungshandhabe 20 von selbst wieder in ihre Sicherungslage zurückkehren, so daß sie nach Erreichen der Ausgangsstellung der Austrageinheit 5 als Rückhub-Mitnehmer für die Austraggruppe 3 dienen können. Insofern bilden die Federarme 33 ebenfalls eine Rückstellfeder für die Austrageinheiten 4, 5.

Im Bereich mindestens eines, insbesondere des Medienspeichers 8 weist der Mantel 14 des Gehäuses 11 zweckmäßig ein Sichtfenster in Form beispielsweise eines Längsschlitzes auf, durch welchen der Füllzustand bzw. die Lage des als Anzeiger geeigneten Schleppkolbens 36 erkannt werden kann. Oberhalb des Sichtfensters 40 bildet der Mantel 14 einen in der Weite geringfügig, nämlich etwa um die Wandungsdicke des Kappenmantels der Betätigungshandhabe 20 reduzierten Abschnitt 41, dessen Länge geringfügig größer als der Betätigungshub ist, so daß er in jeder Stellung von der Betätigungshandhabe 20 übergriffen wird und praktisch kein Schmutz in den Hohlraum innerhalb der Betätigungshandhabe 20 eindringen kann.

Jede Kappe 18 bzw. 19 bildet einen Austragkopf mit einem etwa radial frei nach außen vorstehenden, rohrförmigen Austragstutzen 42 bzw. 43, der in die Kappe 18 bzw. 19 eingesteckt ist. Die beiden Austragstutzen 42, 43 liegen in Draufsicht im spitzen Winkel zueinander und bilden mit ihren freien Enden zwei unmittelbar benachbart zueinander liegende Austragöffnungen 44, 45, die ins Freie führen und deren Mittelachsen einander außerhalb der Austragstutzen 42, 43 schneiden. Die Austragstutzen 42, 43 durchsetzen den Kappenmantel der Betätigungshandhabe 20, die eine über ihren Außenumfang vorstehende Abdeckung 46 als Schutz für die vorstehenden Enden der Austragstutzen 42, 43 bildet. Die Kappe 18 bzw. 19 kann auch mit der Betätigungshandhabe 20 eine vormontierte Baugruppe bilden. Durch Auswechseln der Kappe ist ein einfaches Umrüsten auf unterschiedlich dimensionierte Austragstutzen möglich.

## Patentansprüche

1. Austragvorrichtung für Medien mit mindestens einer durch einen Medienspeicher (8, 9) gebildeten Austraggruppe (2, 3) als Funktionseinheit, die einer Austrageinheit (4, 5) zugeordnet ist, deren Pumpkolben mit einem Betätiungsstößel (6, 7) über einen Austraghub betätigbar ist, sowie mit mindestens einer Austrag-Betätigung, deren Betätigungshandhabe (20) zur Betätigung des Pumpkolbens über einen Betätigungshub gegenüber dem Medienspeicher (8, 9) zu betätigen ist und wenigstens einen Medienauslaß (44, 45) aufweist, dadurch gekennzeichnet, daß der Austraghub über einen Verzögerungshub wenigstens teilweise vom Betätigungshub abgekoppelt und so mindestens eine Funktionseinheit mit der Austrag-Betätigung über eine für die Austrageinheit (4, 5) wenigstens teilweise betätigungsfreie Verzögerung bewegbar ist und daß ferner die Betätigungshandhabe (20) mit der jeweiligen Funktionseinheit bei der Montage über mindestens eine von dem Betätigungsstößel (7) gesonderte Sicherungs-Verbindung (31) zu verbinden ist, die eine Schulter der Funktionseinheit in Sicherungslage hintergreift und beim Betätigungshub nachgebend ist.

2. Austragvorrichtung nach Anspruch 1, dadurch gekennzeichnet, daß zur wegabhängigen Austragsteuerung der Verzögerungshub ein insbesondere im wesentlichen eines der Enden des Betätigungshubes einschließender Teilhub des Betätigungshubes ist und/oder daß der Verzögerungshub durch Anschlag (35) beendet ist, und daß vorzugsweise mindestens eine der Funktionseinheiten den zugehörigen Pumpkolben enthält und wenigstens über einen Teil des Verzögerungshubes gegenüber einem Grundkörper (10) bewegbar bzw. an einer Schiebeführung verschiebbar gelagert ist, wobei insbesondere die Schiebeführung durch ein Gehäuse (11, 12) gebildet ist.

3. Austragvorrichtung nach Anspruch 1 oder 2, dadurch gekennzeichnet, daß die kappenförmige Betätigungshandhabe (20) der Austrag-Betätigung mit der bewegbaren Funktionseinheit in Richtung des Betätigungshubes über einen federnd nachgiebigen Betätigungs-Mitnehmer (30) verbunden ist, der vorzugsweise durch mindestens einen verkürz- bzw. spreizbaren Mitnehmerarm (33) gebildet ist und/oder zur Bildung der Verbindung (31) an einer Außenschulter (32) des Medienspeichers (9) anliegt.

4. Austragvorrichtung nach einem der vorhergehenden Ansprüche, dadurch gekennzeichnet, daß mindestens eine Funktionseinheit über einen Rückhub bewegbar ist, daß insbesondere die Funktionseinheit mit einer Rückstellfeder mindestens einer Austrageinheit (4, 5) bewegbar ist, und daß vorzugsweise der Betätigungs-Mitnehmer (30) bzw. die Verbindung (31) auch als Rückstell-Mitnehmer ausgebildet ist und/oder daß die Verbindung (31) eine den Medienspeicher (9) mit der Betätigungshandhabe (20) verbindende Schnappverbindung (31) ist, und daß insbesondere die Verbindung (31) die Schulter- bzw. einen Ringflansch (26) des Medienspeichers (9) federnd hintergreift.

5. Austragvorrichtung nach einem der vorhergehenden Ansprüche, dadurch gekennzeichnet, daß von wenigstens zwei gemeinsam betätigbaren Austrageinheiten (4, 5) mindestens einer ein Verzögerungshub zugeordnet ist, wobei insbesondere die Anfänge der Austraghübe wenigstens zweier Austrageinheiten (4, 5) entlang des Betätigungshubes gegeneinander versetzt sind.

6. Austragvorrichtung nach einem der vorhergehenden Ansprüche, dadurch gekennzeichnet, daß von wenigstens zwei gesonderten Medienspeichern (8, 9) mindestens einer über den Verzögerungshub bewegbar und vorzugsweise am Ende des Verzögerungshubes mit seinem Bodenende an einem Gehäuse-Boden (17) angeschlagen ist.

7. Austragvorrichtung nach einem der vorhergehenden Ansprüche, dadurch gekennzeichnet, daß für wenigstens einen Medienspeicher (8, 9) ein Außen-Gehäuse (11) vorgesehen ist, daß insbesondere das Außen-Gehäuse (11) für die einsteckbare Aufnahme des jeweiligen Medienspeichers (9) ein kürzeres Innen-Gehäuse (12) aufweist und daß vorzugsweise das Außen-Gehäuse (11) an einem wenigstens teilweise offenen Ende mit der Betätigungshandhabe (20) und/oder am anderen Ende mit einem deckelförmigen Verschluß (13) verschlossen ist.

8. Austragvorrichtung nach einem der vorhergehenden Ansprüche, dadurch gekennzeichnet, daß mindestens zwei Medienspeicher (8, 9) von entgegengesetzten Seiten her in ein Außen-Gehäuse (11) eingesetzt sind, daß insbesondere mindestens ein Medienspeicher (8) zwischen zwei Stirnwänden des Gehäuses (11) im wesentlichen spielfrei angeordnet bzw. verspannt und/oder mit einer Schnappverbindung (29) oder dgl. gesichert ist, daß vorzugsweise das Außen-Gehäuse (11) eine flach-ovale, an einen Medienspeicher (8, 9) angepaßte Querschnittsform aufweist, und daß insbesondere die Querschnittsform im wesentlichen gleich wie die der Betätigungshandhabe (20) ist, welche einen etwa um ihre Wandstärke reduzierten Abschnitt (41) des Gehäuses (11) übergreift.

9. Austragvorrichtung nach einem der vorhergehenden Ansprüche, dadurch gekennzeichnet, daß mindestens eine Austrageinheit (4, 5) durch eine Schubkolbenpumpe mit einem an dem Betätigungsstößel (6, 7) angeordneten Austragkopf (18, 19) gebildet ist und daß vorzugsweise die Betätigungshandhabe (20) über eine Steckverbindung mit dem im wesentlichen in ihr liegenden Austragkopf (18, 19) verbunden und/oder daß die Betätigungshandhabe (20) mit einem Durchtritt für mindestens einen in einer Austragöffnung (44, 45) endenden Austragkanal des Austragkopfes (18, 19) versehen ist.

10. Austragvorrichtung nach einem der vorhergehenden Ansprüche, dadurch gekennzeichnet, daß mindestens ein Medienspeicher (8, 9) im Endbereich eines Speichermantels mit einem gesonderten Gehäuse (11, 12) verschlossen ist und vorzugsweise einen von einem Schleppkolben (36, 37) begrenzten Speicherraum bildet.

11. Austragvorrichtung nach einem der Ansprüche 1 bis 4, 7, 9 und 10, dadurch gekennzeichnet, daß sie nur einen einzigen Medienspeicher (9) und/oder eine einzige Austrageinheit (5) aufweist, daß sie insbesondere für nur eine einzige, im wesentlichen vollständige Entleerung des Medienspeichers ohne Rückhub ausgebildet ist und daß vorzugsweise die Verbindung (31) mindestens einen Federarm aufweist, welcher in Ausgangsstellung der Austrageinheit (5) in der Sicherungslage steht sowie in entgegengesetzten Bewegungsrichtungen im wesentlichen formschlüssig, jedoch durch Spreizen abhebbar, mit der Austraggruppe (3) verbunden ist.

## Claims

1. Discharge apparatus for media with at least one discharge group (2, 3), formed by a medium reservoir (8, 9), as a functional unit and which is associated with a discharge unit (4, 5), whose pump piston is actuatable with an actuator (6, 7) over a discharge stroke, as well as with at least one discharge actuation, whose actuating handle (20) is actuated with respect to the medium reservoir (8, 9) for actuating the pump piston over an actuating stroke and has at least one medium outlet (44, 45), characterized in that the discharge stroke is at least partly separated from the actuating stroke by means of a delay stroke and in this way at least one functional unit is movable with the discharge actuation over an at least partly actuation-free lag for the discharge unit (4, 5) and that further the actuating handle (20) is to be connected to the functional unit on assembly by means of at least one securing connection (31) separate from the actuator (7) and which engages behind a shoulder of the functional unit in the securing position and gives way during the actuating stroke.

2. Discharge apparatus according to claim 1, characterized in that for the path-dependent discharge control the delay stroke is in particular substantially a partial stroke of the actuating stroke enclosing one of the ends of the actuating stroke and/or that the delay stroke is ended by the stop (35) and that preferably at least one of the functional units contains the associated pump piston and at least over part of the delay stroke is movable with respect to a body (10) or is displaceably mounted on a sliding guide and in particular said sliding guide is formed by a casing (11, 12).

3. Discharge apparatus according to claim 1 or 2, characterized in that the cap-like actuating handle (20) of the discharge actuator is connected to the movable functional unit in the direction of the actuating stroke by means of a resilient actuating driver (30), which is preferably formed by at least one shortenable or spreadable driving arm (33) and/or engages on an outer shoulder (32) of the medium reservoir (9) to form the connection (31).

4. Discharge apparatus according to one of the preceding claims, characterized in that at least one functional unit is movable over a return stroke, that in particular the functional unit is movable with a return spring of at least one discharge unit (4, 5) and that preferably the actuating driver (30) or the connection (31) is constructed as a return driver and/or that the connection (31) is a snap connection (31) connecting the medium reservoir (9) to the actuating handle (20) and that in particular the connection (31) resiliently engages behind the shoulder or a ring flange (26) of the medium reservoir (9).

5. Discharge apparatus according to one of the preceding claims, characterized in that with at least one of at least two jointly operable discharge units (4, 5) is associated a delay stroke and in particular the starts of the discharge strokes of at least two discharge units (4, 5) are staggered along the actuating stroke.

6. Discharge apparatus according to one of the preceding claims, characterized in that of at least two separate medium reservoirs (8, 9) at least one is movable over the delay stroke and preferably at the end of the latter its bottom end strikes against a casing bottom (17).

7. Discharge apparatus according to one of the preceding claims, characterized in that for at least one medium reservoir (8, 9) is provided an outer casing (11), that in particular the outer casing (11) has for the insertable reception of the particular medium reservoir (9) a shorter inner casing (12) and that preferably the outer casing (11) is closed at at least one partly open end with the actuating handle (20) and/or at the other end with a lid-like closure (13).

8. Discharge apparatus according to one of the preceding claims, characterized in that at least two medium reservoirs (8, 9) are inserted from opposite sides in an outer casing (11), that in particular one medium reservoir (8) is arranged or braced in a substantially clearance-free manner between two end walls of the casing (11) and/or is secured with a snap connection (29) or the like, that preferably the outer casing (11) has a flat oval cross-sectional shape adapted to a medium reservoir (8, 9) and that in particular the cross-sectional shape is substantially the same as that of the actuating handle (20), which engages over a wall thickness-reduced portion (41) of the casing (11).

9. Discharge apparatus according to one of the preceding claims, characterized in that at least one discharge unit (4, 5) is formed by a thrust piston pump with a discharge head (18, 19) located on the actuator (6, 7) and that preferably the actuating handle (20) is connected by means of a plug connection to the discharge head (18, 19) substantially located therein and/or that the actuating handle (20) is provided with a passage for at least one discharge channel of the discharge head (18, 19) ending in a discharge opening (44, 45).

10. Discharge apparatus according to one of the preceding claims, characterized in that at least one medium reservoir (8, 9) is closed in the end region of a reservoir jacket with a separate casing (11, 12) and preferably forms a reservoir chamber bounded by a drag plunger (36, 37).

11. Discharge apparatus according to one of the claims 1 to 4, 7, 9 and 10, characterized in that it only has a single medium reservoir (9) and/or a single discharge unit (5), that it is constructed only for a single, substantially complete emptying of the medium reservoir without return stroke and that preferably the connection (31) has at least one spring arm, which in the starting position of the discharge unit (5) is in the secured position, as well as in opposite movement directions is connected positively with the discharge group (3), but is raisable by spreading.

## Revendications

1. Distributeur de matières, notamment de fluides, avec au moins un groupe de distribution (2, 3) formé par un réservoir de fluide (8, 9), comme unité fonctionnelle qui est associée à une unité de distribution (4, 5) dont le piston de pompe peut être actionné sur une course de distribution par un poussoir d'actionnement (6, 7), ainsi qu'avec au moins un actionneur de distribution, dont la poignée d'actionnement (20) peut être actionnée pour l'actionnement du piston de pompe sur une course d'actionnement par rapport au réservoir de fluide (8, 9) et présente au moins une évacuation de fluide (44, 45), **caractérisé** en ce que la course de distribution est désaccouplée de la course d'actionnement au moins partiellement sur une course de retardement, et au moins une unité fonctionnelle peut ainsi être déplacée par l'actionneur de distribution pendant un délai au moins partiellement exempt d'actionnement de l'unité de distribution (4, 5), et en ce qu'en outre, la poignée d'actionnement (20) peut, lors du montage, être assemblée à l'unité fonctionnelle respective par au moins un assemblage de verrouillage (31) distinct du poussoir d'actionnement (7), qui s'engage derrière un épaulement de l'unité fonctionnelle en position de verrouillage et qui cède lors de la course d'actionnement.

2. Distributeur selon la revendication 1, **caractérisé** en ce que pour la commande de distribution en fonction du déplacement la course de retardement est une course partielle de la course d'actionnement incluant notamment essentiellement une des extrémités de la course d'actionnement et/ou en ce que la course de retardement est terminée par butée (35), et en ce que, de préférence, au moins une des unités fonctionelles comprend le piston de pompe associé et est montée, au moins sur une partie de la course de retardement, à déplacement ou encore à coulissement sur une coulisse par rapport à un corps de base (10), la coulisse étant notamment formée par un boîtier (11, 12).

3. Distributeur selon la revendication 1 ou 2, **caractérisé** en ce que la poignée d'actionnement (20) en forme de capuchon de l'actionneur de distribution est assemblée à l'unité fonctionnelle mobile, dans la direction de la course d'actionnement, par un entraîneur d'actionnement (30) cédant élastiquement, qui est de préférence formé par au moins un bras entraîneur (33) pouvant être raccourci ou écarté, et/ou qui s'applique contre un épaulement extérieur (32) du réservoir de fluide (9) afin de former l'assemblage (31).

4. Distributeur selon une des revendications précédentes, **caractérisé** en ce qu'au moins une unité fonctionnelle peut être déplacée sur une course de retour, en ce que, notamment, l'unité fonctionnelle peut être déplacée par un ressort de rappel d'au moins une unité de distribution (4, 5), et en ce que, de préférence, l'entraîneur d'actionnement (30) ou encore l'assemblage (31) est également conçu comme entraîneur de rappel et/ou en ce que l'assemblage (31) est un assemblage à enclenchement (31) assemblant le réservoir de fluide (9) à la poignée d'actionnement (20), et en ce que, notamment, l'assemblage (31) s'engage élastiquement derrière l'épaulement ou une bride annulaire (26) du réservoir de fluide (9).

5. Distributeur selon une des revendications précédentes, **caractérisé** en ce qu'une course de retardement est associée à au moins l'une d'au moins deux unités de distribution (4, 5) pouvant être conjointement actionnées, les débuts des courses de distribution d'au moins deux unités de distribution (4, 5) étant notamment mutuellement décalés sur la longueur de la course d'actionnement.

6. Distributeur selon une des revendications précédentes, **caractérisé** en ce qu'au moins l'un d'au moins deux réservoirs de fluide distincts (8, 9) peut être déplacé sur la course de retardement et se trouve de préférence, à la fin de la course de retardement, en butée par son extrémité de fond contre un fond de boîtier (17).

7. Distributeur selon une des revendications précédentes, **caractérisé** en ce qu'un boîtier extérieur (11) est prévu pour au moins un réservoir de fluide (8, 9), en ce que, notamment, le boîtier extérieur (11) présente un boîtier intérieur (12) plus court pour recevoir par emboîtement le réservoir de fluide respectif (9), et en ce que, de préférence, le boîtier extérieur (11) est fermé par la poignée d'actionnement (20) à une extrémité au moins partiellement ouverte, et/ou, à l'autre extrémité, par un obturateur (13) en forme de couvercle.

8. Distributeur selon une des revendications précédentes, **caractérisé** en ce qu'au moins deux réservoirs de fluide (8, 9) peuvent être introduits par des côtés opposés dans un boîtier extérieur (11), en ce que, notamment, au moins un réservoir de fluide (8) est disposé sensiblement sans jeu ou encore serré entre deux parois frontales du boîtier (11) et/ou est assujetti par un assemblage à enclenchement (29) ou analogue, en ce que, de préférence, le boîtier extérieur (11) présente une forme de section ovale et plate, adaptée à un réservoir de fluide (8, 9), et en ce que, notamment, la forme de section est sensiblement identique à celle de la poignée d'actionnement (20), qui s'engage en recouvrement d'un tronçon (41) du boîtier (11) qui est réduit environ de l'épaisseur de paroi de cette poignée.

9. Distributeur selon une des revendications précédentes, **caractérisé** en ce qu'au moins une unité de distribution (4, 5) est formée par une pompe à piston pourvue d'une tête de distribution (18, 19) disposée sur le poussoir d'actionnement (6, 7), et en ce que, de préférence, la poignée d'actionnement (20) est assemblée par un assemblage à emboîtement à la tête de distribution (18, 19), qui se trouve essentiellement dans cette poignée, et/ou en ce que la poignée d'actionnement (20) est pourvue d'un passage pour au moins un canal de distribution de la tête de distribution (18, 19), canal qui se termine par une ouverture de distribution (44, 45).

10. Distributeur selon une des revendications précédentes, **caractérisé** en ce qu'au moins un réservoir de fluide (8, 9) est fermé dans la région terminale d'une enveloppe de stockage par un boîtier distinct (11, 12), et forme de préférence une chambre de stockage délimitée par un piston remorqué (36, 37).

11. Distributeur selon une des revendications 1 à 4, 7, 9 et 10, **caractérisé** en ce qu'il présente un seul réservoir de fluide (9) et/ou une seule unité de distribution (5), en ce qu'il est notamment conçu pour un seul vidage, sensiblement total, du réservoir de fluide, sans course de retour, et en ce que, de préférence, l'assemblage (31) présente au moins un bras élastique, qui se trouve en position de verrouillage dans la position initiale de l'unité de distribution (5), et qui est assemblé au groupe de distribution (3) essentiellement par engagement positif dans des directions de déplacement opposées, mais en pouvant être dégagé par écartement.
